# EUROPÄISCHE PATENTSCHRIFT

(11) **EP 1 441 935 B1**
(45) Veröffentlichungstag und Bekanntmachung des Hinweises auf die Patenterteilung: **11.10.2006**
(21) Anmeldenummer: 02802635.9
(22) Anmeldetag: 30.10.2002
(51) Int. Cl.: B60S 1/50

(54) **SCHEIBENWISCH-WASSERBEHÄLTER**
WINDSHIELD WIPER FLUID RESERVOIR
RESERVOIR D'EAU POUR ESSUIE-GLACE

(30) Priorität: 09.11.2001 DE 20118271 U
(43) Veröffentlichungstag der Anmeldung: 04.08.2004
(73) Patentinhaber: REHAU AG + Co, 95111 Rehau (DE)
(72) Erfinder: WINTERLING, Stefan, 95182 Döhlau (DE)
(86) Internationale Anmeldenummer: PCT/EP2002/012090
(87) Internationale Veröffentlichungsnummer: WO 2003/039923

(56) Entgegenhaltungen:
- EP-A- 0 360 100
- DE-A- 19 637 925
- GB-A- 2 065 580
- GB-A- 2 290 461
- US-A- 3 187 936
- US-A- 6 044 517

## Beschreibung

Die Erfindung betrifft einen Scheibenwisch-Wasserbehälter mit einer Verschlusseinrichtung und einem Befüllstutzen zur Verwendung in einer Scheibenwaschanlage für Kraftfahrzeuge.

Allgemein bekannt sind Scheibenwisch-Wasserbehälter, die eine Verschlusseinrichtung und einen Befüllstutzen umfassen.
Bei modernen Kraftfahrzeugen sind Scheibenwischanlagen vorgesehen, bei denen das Wischwasser gegebenenfalls unter Zusetzung einer Reinigungsflüssigkeit oder eines Frostschutzmittels in den Behälter aufgenommen wird. Üblicherweise sind solche Scheibenwisch-Wasserbehälter im Motorraum eines Kraftfahrzeuges angeordnet. Der Befüllstutzen ist mit einem einrastbaren Kunststoffdeckel versehen. Bei im Motorraum der Kraftfahrzeuge angeordneten Scheibenwisch-Wasserbehältern sind diese meistens mit einer relativ großen Einfüllöffnung versehen, so dass beim Befüllen genügend Platz vorhanden ist, um problemlos die im Behälter befindliche Luft entweichen zu lassen.

Moderne Kraftfahrzeuge umfassen eine Vielzahl von Aggregaten, die neben dem eigentlichen Motor im Motorraum untergebracht werden müssen. Daneben werden die Motoren gekapselt, um eine gewisse Gebrauchsdämmung zu erreichen. Dies führt im Allgemeinen dazu, dass der Motorraum nahezu ausgefüllt ist.

Da bei heutigen Kraftfahrzeugen dazu übergegangen wird, neben der Reinigungseinrichtung für die Frontscheiben auch Einrichtungen zur Reinigung der Heckscheiben sowie der Scheinwerfer vorzusehen, müssen die Scheibenwisch-Wasserbehälter eine größere Menge des Waschwassers aufnehmen.
Beispielsweise beträgt der Inhalt eines Scheibenwisch-Wasserbehälters üblicherweise 1,5 bis 3 Liter, wenn nur eine Scheibenreinigungsanlage vorgesehen ist. Wird aus demselben Behälter auch das Waschwasser für die Scheinwerfer entnommen, so steigt der Inhalt auf 5 bis 7 Liter.

Bei den engen Platzverhältnissen im Motorraum ist eine Vergrößerung des Scheibenwisch-Wasserbehälters nicht immer möglich.

Es wird dazu übergegangen, solche Scheibenwisch-Wasserbehälter in Hohlräumen in der Karosserie unterzubringen. Dies kann beispielsweise in der Motorhaube, im Dachbereich oder im Kofferraumdeckel erfolgen. Des weiteren können solche Scheibenwisch-Wasserbehälter auch im Bereich der Kotflügel untergebracht sein.

Ein Flüssigkeitsbehälter für ein Kraftfahrzeug, der im Hohlraum der Karosserie angeordnet ist, ist aus der DE 41 23 947 A1 bekannt. Der Flüssigkeitsbehälter kann an den zum Fahrzeuginnenraum zugewandten Oberflächen der Motorhaube und/oder Dachaufbaus angeordnet sein, wobei die Form des jeweiligen Flüssigkeitsbehälters den räumlichen Gegebenheiten ausgeglichen ist. Bei der Anordnung des Flüssigkeitsbehälters an der Motorhaube und / oder am Kofferraumdeckel ist der Flüssigkeitsbehälter mit einem ausklappbaren Einfülltrichter versehen. Die Einfüllöffnung des Flüssigkeitsbehälters wird durch einen Deckel oder dergleichen verschraubt, um ein Auslaufen der Flüssigkeit zu verhindern.
Aufgrund der Platzverhältnisse sind die Einfüllstutzen bzw. Einfülltrichter relativ eng ausgebildet. Beim Befüllen der Behälter mit Waschflüssigkeit kann die im Behälter eingeschlossene Luft nicht immer problemlos entweichen.
Um einen entsprechenden Druckausgleich beim Befüllen des Scheibenwisch-Wasserbehälters zu bewirken, ist bereits vorgeschlagen worden, in den Einfüllstutzen einen Schlauch einzulegen, ein Entlüftungsventil am Behälter vorzusehen oder einen Schlauch auf den Behälter aufzustecken.

Beim eingelegten bzw. aufgesteckten Schlauch bestehen die Nachteile in einem hohen konstruktiven Aufwand für die Fertigung der Schlauchaufnahme sowie in einer entsprechenden Führung für den Schlauch. Entlüftungsventile bestehen aus mehreren Teilen und können durch Verschmutzung in ihrer Funktion beeinträchtigt werden.

Die US-A-6 044 517 zeigt eine Vorrichtung zum Befüllen eines Waschwasserbehälters einer hinteren Wischeranlage eines Kraftfahrzeugs einschließlich eines Befüllstutzens, der ein Hauptgehäuse und einen Deckel aufweist. Das Hauptgehäuse definiert eine Öffnung für die Aufnahme des Waschwassers. Eine erste Leitung gewährleistet die Fluidkommunikation zwischen der Öffnung und dem Wachwasserbehälter. Eine zweite Öffnung erlaubt die Entlüftung des Waschwasserbehälters zurück zur Öffnung und gewährleistet ein vollständiges Entweichen der Gase nach außen.

In der US-A-3 187 936 ist ein Kraftstoffbefüllsystem mit einem Kraftstofftank und einem damit in Verbindung stehenden Befüllstutzen offenbart. Um ein Entweichen der Gase beim Einfüllen des Kraftstoffes zu ermöglichen, ist an der Außenseite der Kraftstoffeinfülleitung eine Entlüftungsleitung einstückig angebracht. Sowohl die Entlüftungsleitung als auch die Kraftstoffeinfüllleitung kommuniziert mit einem Ende mit dem Kraftstoffbehältnis.

Es ist daher Aufgabe der vorliegenden Erfindung, einen bekannten Scheibenwisch-Wasserbehälter mit einer Verschlussrichtung und einem Befüllstutzen in solch einer Weise weiterzubilden, dass eine verbesserte Füllmöglichkeit gegeben ist, insbesondere eine Druckbefüllung mittels einer Zapfpistole ermöglicht wird.

Erfindungsgemäß wird diese Aufgabe durch einen Scheibenwisch-Wasserbehälter nach Anspruch 1 gelöst, wobei ein Befüllstutzen mit integriertem Entlüftungskanal in einstückiger Bauweise angeordnet ist. Weiterbildungen der Erfindung sind in den abhängigen Ansprüchen angegeben. Der Entlüftungskanal wird dabei durch Umformung des oberen Bereichs des Befüllstutzens angeformt. Dies erfolgt durch Eindrücken der Seitenflächen im oberen Drittel des Befüllstutzens in Längsrichtung gesehen. Die Öffnung des Entlüftungskanals endet unterhalb der Einfüllöffnung des Befüllstutzens und ist gleichzeitig mit dem Deckel für den Befüllstutzens verschließbar.
Das Eindrücken der oberen Seitenflächen des Befüllstutzens erfolgt in einer vorgegebenen Länge, wobei die Einfüllöffnung und der Verbindungsstutzen zum Scheibenwisch-Wasserbehälter in seiner Form erhalten bleiben. Durch diese Ausbildung bzw. die Herstellung wird ein Scheibenwisch-Wasserbehälter mit einem Befüllstutzen geschaffen, der ohne zusätzliche Bauteile bzw. Baugruppen einen Entlüftungskanal aufweist.

Anhand eines Ausführungsbeispiels soll die Erfindung näher erläutert werden
Es zeigen
Figur 1 - Längsschnitt durch den Befüllstutzen
Figur 2 - Schnitt A-A

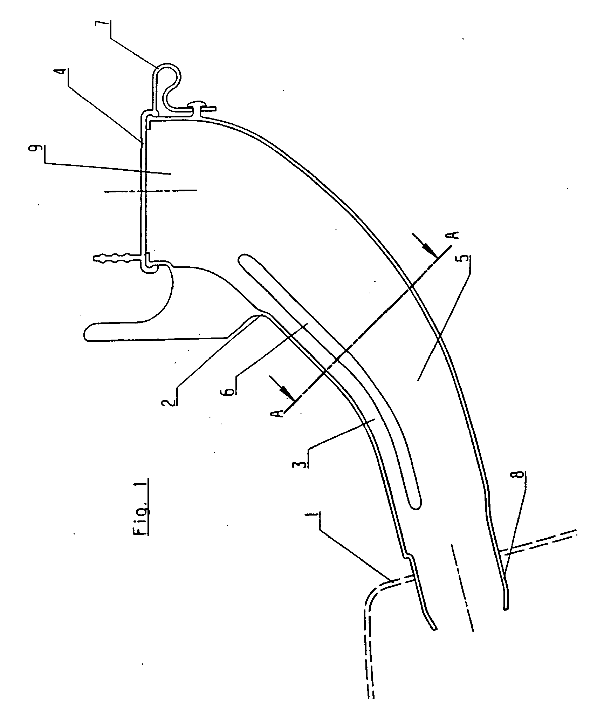

Die Figur 1 zeigt einen Längsschnitt durch den Befüllstutzen 2 eines Scheibenwisch-Wasserbehälters 1. Der Scheibenwisch-Wasserbehälter 1 ist in der Figur nur andeutungsweise dargestellt. Der Befüllstutzen 2 ist mittels des Stutzens 8 mit dem Scheibenwisch-Wasserbehälters 1 verbunden.
Die Einfüllöffnung 9 ist mittels eines aufrastbaren Deckels 4 verschlossen. Über die Deckelhalterung 7 ist der Deckel 4 mit den Befüllstutzen 2 verbunden.

Der Befüllstutzen 2 ist in einen Entlüftungskanal 3 und einen Befüllkanal 5 aufgeteilt.
Der Entlüftungskanal 3 wird dadurch gebildet, dass im oberen Drittel des Befüllstutzens 2 die Seitenflächen 6 nach innen eingedrückt werden und zwar derart, dass sich die Stirnflächen 10 etwa mittig berühren. Dies wird dadurch erreicht, dass der als Blasteil ausgeführte Befüllstutzen 2 durch ein entsprechendes Werkzeug, das an den Seitenflächen 6 im oberen Drittel angreift, eingedrückt wird. Der Entlüftungskanal 3 endet kurz vor der Einfüllöffnung 9, so dass dieser mittels des Deckels 4 gleichzeitig mit verschlossen werden kann.

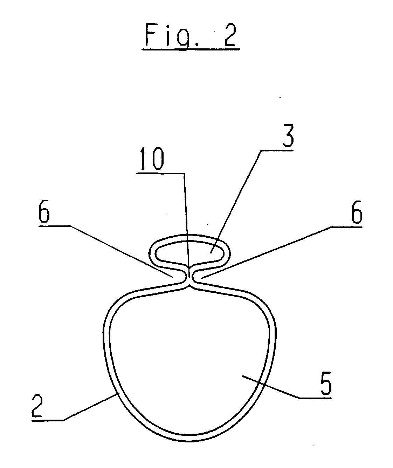

Die Figur 2 zeigt einen Schnitt entlang der Linie A-A durch den Befüllstutzen 2. Aus der Schnittdarstellung ist erkennbar, dass der Entlüftungskanal 3 und der Befüllkanal 5 einstückig den gesamten Befüllstutzen 2 bilden.
Die Seitenflächen 6 sind beidseitig im oberen Drittel des Befüllstutzens eingedrückt. Die Stirnflächen 10 treffen sich in etwa mittig, wodurch einerseits der Entlüftungskanal und andererseits der Befüllkanal gebildet wird.
Beim Befüllen des Scheibenwisch-Wasserbehälters 1 wird die Zapfpistole in die große Öffnung des Befüllstutzens 2 eingebracht. Das Scheibenwischwasser läuft über den Befüllkanal 5 in den Scheibenwisch-Wasserbehälter 1. Die verdrängte Luft kann während der Druckbefüllung durch den kleineren Entlüftungskanal 3 aus dem Behälter entweichen.

### Bezugszeichen

- 1 -: Scheibenwisch-Wasserbehälter
- 2 -: Befüllstutzen
- 3 -: Entlüftungskanal
- 4 -: Deckel
- 5 -: Befüllkanal
- 6 -: Seitenflächen
- 7 -: Deckelhalterung
- 8 -: Stutzen
- 9 -: Einfüllöffnung
- 10 -: Stirnfläche

## Patentansprüche

1. Scheibenwischwasserbehälter einschließlich
- einem Wasserbehälter (1);
- einem Befüllstutzen (2) mit einem ersten Füllstutzenende, das offen und an das Aufnehmen des Fluids angepasst, und einem zweiten Füllstutzenende, das mit dem Wasserbehälter verbunden ist;
- einer Verschlusseinrichtung, die an dem ersten Füllstutzenende angeordnet ist; und
- einem in dem Befüllstutzen angeordneten Entlüftungskanal, wobei der Entlüftungskanal ein erstes Entlüftungskanalende beabstandet von dem ersten Füllstutzenende in Richtung des zweiten Füllstutzenendes aufweist, und ein zweites Entlüftungskanalende beabstandet von dem ersten Entlüftungskanalende in Richtung des zweiten Füllstutzenendes aufweist.

2. Scheibenwischwasserbehälter nach Anspruch 1, **dadurch gekennzeichnet, dass** der Entlüftungskanal durch ein Paar von entgegengesetzten Einbuchtungen begrenzt ist, die in dem Befüllstutzen ausgebildet sind und sich über einen Bereich des Befüllstutzens erstrecken.

3. Scheibenwischwasserbehälter nach Anspruch 2, **dadurch gekennzeichnet, dass** das Paar von entgegengesetzten Einbuchtungen annähernd ein Drittel so lang wie der Befüllstutzen ist.

4. Scheibenwischwasserbehälter nach Anspruch 1, **dadurch gekennzeichnet, dass** die Verschlusseinrichtung gleichzeitig den Befüllstutzen und den Entlüftungskanal verschließt.

5. Scheibenwischwasserbehälter nach Anspruch 1, **dadurch gekennzeichnet, dass** der Befüllstutzen einen annähernd kreisförmigen Querschnitt am ersten Ende und am zweiten Ende des Befüllstutzens, und der Befüllstutzen einen annähernd achtförmigen Querschnitt entlang des Entlüftungskanals aufweist.

## Claims

1. Windscreen wiper fluid reservoir including
- a fluid reservoir (1);
- a filling tube (2) with a first filling-tube end, which is open and is suited to receiving the fluid, and a second filling-tube end which is connected to the fluid reservoir;
- a closure device which is arranged at the first filling-tube end; and
- a ventilation duct which is arranged in the filling tube, the ventilation duct having a first ventilation-duct end spaced apart from the first filling-tube end in the direction of the second filling-tube end, and having a second ventilation-duct end spaced apart from the first ventilation-duct end in the direction of the second filling-tube end.

2. Windscreen wiper fluid reservoir according to Claim 1, **characterized in that** the ventilation duct is bounded by a pair of opposite indentations which are formed in the filling tube and extend over a region of the filling tube.

3. Windscreen wiper fluid reservoir according to Claim 2, **characterized in that** the pair of opposite indentations is approximately a third of the length of the filling tube.

4. Windscreen wiper fluid reservoir according to Claim 1, **characterized in that** the closure device simultaneously closes the filling tube and the ventilation duct.

5. Windscreen wiper fluid reservoir according to Claim 1, **characterized in that** the filling tube has an approximately circular cross section at the first end and at the second end of the filling tube, and the filling tube has an approximately figure-eight shaped cross section along the ventilation duct.

## Revendications

1. Réservoir d'eau pour essuie-glace, comprenant :
- un réservoir d'eau (1) ;
- une tubulure de remplissage (2) avec une première extrémité de tubulure de remplissage qui est ouverte et qui est adaptée pour recevoir le fluide, et avec une deuxième extrémité de tubulure de remplissage qui est connectée au réservoir d'eau ;
- un dispositif de fermeture qui est disposé sur la première extrémité de tubulure de remplissage ; et
- un canal de désaérage disposé dans la tubulure de remplissage, le canal de désaérage présentant une première extrémité de canal de désaérage éloignée de la première extrémité de tubulure de remplissage dans la direction de la deuxième extrémité de tubulure de remplissage, et une deuxième extrémité de canal de désaérage éloignée de la première extrémité de canal de désaérage dans la direction de la deuxième extrémité de tubulure de remplissage.

2. Réservoir d'eau pour essuie-glace selon la revendication 1, **caractérisé en ce que** le canal de désaérage est limité par une paire de renfoncements opposés qui sont réalisés dans la tubulure de remplissage et qui s'étendent sur une région de la tubulure de remplissage.

3. Réservoir d'eau pour essuie-glace selon la revendication 2, **caractérisé en ce que** la paire de renfoncements opposés mesure approximativement un tiers de la longueur de la tubulure de remplissage.

4. Réservoir d'eau pour essuie-glace selon la revendication 1, **caractérisé en ce que** le dispositif de fermeture ferme en même temps la tubulure de remplissage et le canal de désaérage.

5. Réservoir d'eau pour essuie-glace selon la revendication 1, **caractérisé en ce que** la tubulure de remplissage présente une section transversale approximativement circulaire au niveau de la première extrémité et au niveau de la deuxième extrémité de la tubulure de remplissage, et la tubulure de remplissage présente une section transversale approximativement en forme de huit le long du canal de désaérage.
